# EUROPEAN PATENT APPLICATION

(11) **EP 4 184 464 A1**
(43) Date of publication of application: **24.05.2023**
(21) Application number: 21209322.3
(22) Date of filing: 19.11.2021
(51) Int. Cl.: G07F 7/06, A47F 1/08

(54) **REUSABLE RECEPTACLES COLLECTION CONTAINER**

(71) Applicant: de Kerpel, Rudi, 9080 Lochristi (BE)
(72) Inventor: de Kerpel, Rudi, 9080 Lochristi (BE)
(74) Representative: De Clercq & Partners

(57) **Abstract**

The invention relates to a collection container comprising:
- at least one disposal module, wherein the disposal module comprises a disposal opening in the collection container, suitable for allowing first reusable receptacles;
- at least one first reusable receptacle receiver, configured to receive and stack first reusable receptacle into first stacks;
- a receptacle transport system, for transporting the first reusable receptacles, and, from the disposal module to the at least one first reusable receptacle receiver
wherein:
- the at least one first reusable receptacle receiver is orientated horizontally, thereby stacking the first reusable receptacle into horizontal first stack.

The invention further provides in a kit comprising such a collection container and reusable receptacles.

## Description

### TECHNICAL FIELD

The invention relates to the field of reusable receptacles, such as reusable beakers, bowls, plates, mugs; and the management and collection of said reusable receptacles at, inter alia, events and festivals.

### TECHNOLOGICAL BACKGROUND OF THE INVENTION

Nowadays, it is impossible to imagine events without the use of reusable receptacles, such as beakers. Nevertheless, the use of reusable receptacles results in a considerable additional burden for event organizers. Thus, the reusable receptacles have to be kept out of the other waste streams and the reusable receptacles have to be collected. As a result thereof, there is thus a need for efficient ways of collecting the reusable receptacles. There is a demand for collection container with a high capacity, so that emptying of these collection containers can be kept to a minimum. Preferably, the collected reusable receptacles are dishwasher-ready. Preferably, the collected receptacles are empty. Preferably, the collected receptacles comprise no other objects, such as non-reusable receptacles or receptacles of a different kind. Preferably, the receptacles are collected in such a way that they do not take up an unnecessarily large volume. Preferably, the reusable receptacles are collected with minimal intervention or without any intervention by the event organizers. Preferably, the reusable receptacles are collected by the users of the reusable receptacles. Preferably, the users are incited to take part in collecting the reusable receptacles. Preferably, collecting the reusable receptacles is incorporated in a payment system for paying for beverages and food which is served in the reusable receptacles.

### SUMMARY

There is therefore a need for methods and appliances which offer a solution for one or one or more of the abovementioned needs.

Various aspects of the invention are described below. Embodiments of one aspect are also embodiments of the other aspects. Preferred embodiments of one aspect are also preferred embodiments of the other aspects.

The invention provides in a collection container comprising:
- at least one disposal module, wherein the disposal module comprises a disposal opening in the collection container, suitable for allowing first reusable receptacles, and optionally second reusable receptacles, to enter the collection container;
- at least one first reusable receptacle receiver, configured to receive and stack first reusable receptacle into first stacks;
- optionally at least one second reusable receptacle receiver, configured to receive and stack second reusable receptacle into second stacks;
- a receptacle transport system, for transporting the first reusable receptacles, and optionally the second reusable receptacles, from the disposal module to the at least one first reusable receptacle receiver and optionally to at least one second reusable receptacle receiver;
wherein:
- the at least one first reusable receptacle receiver is orientated horizontally, thereby stacking the first reusable receptacle into horizontal first stacks; and,
- optionally in that the at least one second reusable receptacle receiver is orientated horizontally, thereby stacking the second reusable receptacle into horizontal second stacks.

In an embodiment, for each reusable receptacle receiver, at least one collection cartridge configured to receive stacks from said reusable receptacle receiver, preferably at least one collection cartridge is configured below the reusable receptacle receiver.

In an embodiment, the disposal module is configured to provide a reusable receptacle horizontally to the receptacle transport system or to the at least one reusable receptacle receivers.

In an embodiment, the receptacle transport system is configured to transport the receptacle horizontally from the disposal module to the at least one reusable receptacle receiver.

In an embodiment, the receptacle transport system comprises a first track, connecting the disposal module with the first reusable receptacle receiver; and a second track, connecting the disposal module the second reusable receptacle receiver.

In an embodiment, the disposal module comprises a recognition module, configure to distinguish reusable receptacles into first reusable receptacles and second reusable receptacles.

In an embodiment, the first reusable receptacles and the second reusable receptacles differ in size and/or in volume.

In an embodiment, the recognition module comprises a label reader, and preferably wherein the first reusable receptacles and the second reusable receptacles are labelled each with a label.

In an embodiment, the recognition module directs the receptacle transport system towards transporting the first reusable receptacles to the first reusable receptacle receiver and the second reusable receptacles to the second reusable receptacle receiver, preferably based on the information on the label on the receptacle.

In an embodiment, the receptacle transport system comprises a propulsion system, suitable for propelling a reusable receptacle into a reusable receptacle receiver, thereby stacking the reusable receptacles into the reusable receptacle receiver forming stacks.

In an embodiment, each reusable receptacle receiver comprises at least two parallel rails, wherein the distance between the at least two parallel rails is suitable for supporting reusable receptacles or stacks, preferably wherein said at least two parallel rails of a reusable receptacle receiver can be moved away from each other, so that the distance between the two rails is too large to support reusable receptacles or stacks.

In an embodiment, the collection cartridges serve as temporary storage places for stacks of reusable receptacles, after the stacks have been expelled from the reusable receptacle receivers.

In an embodiment, the bottom of the collection cartridge may comprise a flap or flaps, said flap(s) being able to open the bottom or close the bottom of the collection cartridge.

In an embodiment, a slot suitable for accommodating a crate or multiple slots suitable for accommodating a crate, are placed below the collection cartridges.

In an embodiment, the reusable receptacles are beakers, preferably partly conical beakers, preferably partly conical stackable beakers.

The invention further provides in a kit, comprising:
- at least one, preferably several, first reusable receptacle provided with a label which bears information, preferably wherein said first reusable receptacle is a first reusable beaker;
- optionally, at least one, preferably several, second reusable receptacle provided with a label which bears information, preferably wherein said second reusable receptacle is a second reusable beaker; and,
- a collection container according to an embodiment described herein.

Embodiments of one aspect are embodiments of the other aspects.

### DESCRIPTION OF THE FIGURES

In order to illustrate the characterizing features of the invention more clearly, some preferred embodiments of the present invention are described in the attached figures without being limited thereto. The figures are described in more detail in the examples.
**Fig. 1** shows a collection container according to an embodiment of the invention, with the door in an open position, revealing some of the inside of the collection container.
**Fig. 2a and 2b** show details of the door of the collection container depicted in Fig. 1.
**Fig. 3a to 3d** shows the first reusable receptacle receiver and the second reusable receptacle receiver as used in the collection container depicted in Fig. 1.
**Fig. 4** shows how a reusable receptacle receiver and a collection cartridge are placed inside the collection container depicted in Fig. 1.
**Fig. 5a and 5b** depicts a detail on how stacks are collected in a collection cartridge as used the collection container depicted in Fig. 1.
**Fig. 6** depicts details of the transport system as used in the collection container depicted in Fig. 1.

### DETAILED DESCRIPTION

Before describing the present systems and methods according to the invention, it should be understood that this invention is not limited to the specific described systems and methods or combinations, since such systems and methods and combinations may obviously vary. It should also be clear that the terminology used herein is not intended to be limiting, since the scope of the present invention is only limited by the attached claims.

All documents cited in the present specification are deemed to be incorporated herein in their entirety by way of reference.

As used below in this text, the singular forms "a", "an", "the" include both the singular and the plural, unless the context clearly indicates otherwise. The terms "comprise", "comprises" as used below are synonymous with "including", "include" or "contain", "contains" and are inclusive or open and do not exclude additional unmentioned parts, elements or method steps. The terms "comprise", "comprises" include the term "contain", "containing".

The enumeration of numeric values by means of ranges of figures comprises all values and fractions in these ranges, as well as the cited end points. The term "approximately" as used when referring to a measurable value, such as a parameter, an amount, a time period, and the like, is intended to include variations of +/- 10% or less, preferably +/-5% or less, more preferably +/-1% or less, and still more preferably +/-0.1% or less, of and from the specified value, in so far as the variations apply in order to function in the invention disclosed herein. It should be understood that the value to which the term "approximately" refers per se has also been disclosed.

In the following passages, various aspects of the invention are defined in more detail. Each aspect so defined may be combined with any other aspect or aspects unless clearly indicated to the contrary. In particular, any feature indicated as being "preferred" or "advantageous" may be combined with any other feature or features indicated as being "preferred" and/or "advantageous". Reference in this specification to "one embodiment" or "an embodiment" means that a certain function, structure or characteristic which is described in connection with the embodiment applies to at least one embodiment of the present invention. When the phrases "in one embodiment" or "an embodiment" are mentioned at different locations in this specification, these do not necessarily refer to the same embodiment, although this is not excluded. Furthermore, the described features, structures or characteristics may be combined in any suitable manner, as is clear to a person skilled in the art on the basis of this description. The embodiments which are described, and which are defined in the claims may be used in any combination. In the present description of the invention, reference is made to the accompanying drawings that form a part hereof, and which illustrate specific embodiments of the invention. Parenthesized or emboldened reference numerals connected to certain elements illustrate the relevant elements by way of example, without thereby limiting the elements. It should be understood that other embodiments may be utilised, and structural or logical changes may be made without departing from the scope of the present invention. The following detailed description is not to be taken in a limiting sense, and the scope of the present invention is defined by the attached claims.

Unless defined otherwise, all terms disclosed in the invention, including technical and scientific terms, have the meaning which a person skilled in the art usually gives them. For further guidance, definitions are included to further explain terms which are used in the description of the invention.

The term "reusable receptacle", as used herein, refers to a container suitable for beverages and/or food, in which the container is suitable to be used several times, optionally after a cleaning operation. Examples of reusable receptacles are beakers, bowls, plates, mugs, cups and the like. Said beakers may be in the form of typical kinds of glasses, such as for example beer glasses or wine glasses. Preferably, the reusable receptacles are made from plastic, such as polycarbonate, polypropylene, polyethylene or a polyester (Tritan) to name a few.

In an embodiment, the reusable receptacles are beakers, preferably partly conical beakers, preferably partly conical stackable beakers.

In an embodiment, the partly conical beakers having the larger diameter at the upper rim and the smallest diameter at the foot.

In an embodiment, each reusable receptacles comprise a label, preferably each reusable receptacles comprise a unique label.

As used herein the term "vertical reusable receptacle" refers to a reusable receptacle in its functional orientation, in its upright orientation, in the orientation wherein it can contain a liquid or a beverage.

As used herein the term "horizontal reusable receptacle" refers to a reusable receptacle that has been tipped over from its "vertical orientation", or being tipped over from its functional orientation. For conical reusable receptacles, in the vertical orientation, the reusable receptacle is resting on the foot of the reusable receptacle, in the horizontal orientation the reusable receptacle is resting on the conical side walls of the reusable receptacle.

In an embodiment, the reusable receptacles are stackable, preferably in the collector. This has the advantage that a collection of reusable receptacles takes up a smaller volume than the sum of the contents of all reusable receptacles in the collection. In other words, it is possible to collect a larger number of stackable reusable receptacles in the same volume than when the reusable receptacles are not stackable.

The term "stack" as used herein refers to multiple reusable receptacles that are placed on top of each other, and wherein at least parts of a n^{th} reusable receptacle fit into the (n+1)^{th} reusable receptacle, or *vice versa.* The multiple reusable receptacles may form an elongated assembly. When conical reusable receptacles are being used, the stacks comprise a cylindrical middle section. Preferably, the stacks can role due to the cylindrical middle section. The advantage of such cylindrical stacks is that the stacks can be rolled towards a different position.

The term "horizontal stack" as used herein, refers to a stack wherein the longitudinal axis is orientated horizontally. For a stack of conical reusable receptacles or beakers, a horizontal stack is resting on the mantel of the cylindrical part.

The term "horizontal" as used herein refers to a direction that aligns with the horizon plus or minus 35°, preferably plus or minus 30°, preferably plus or minus 25°, preferably plus or minus 20°, preferably plus or minus 15°, preferably plus or minus 10°, preferably plus or minus 5°.

The invention relates to a collection container comprising:
- at least one disposal module, wherein the disposal module comprises a disposal opening in the collection container, suitable for allowing first reusable receptacles;
- at least one first reusable receptacle receiver, configured to receive and stack first reusable receptacle into first stacks;
- a receptacle transport system, for transporting the first reusable receptacles, and, from the disposal module to the at least one first reusable receptacle receiver
wherein:
- the at least one first reusable receptacle receiver is orientated horizontally, thereby stacking the first reusable receptacle into horizontal first stack.

More particularly, the invention provides in a collection container comprising:
- at least one disposal module, wherein the disposal module comprises a disposal opening in the collection container, suitable for allowing first reusable receptacles, and optionally second reusable receptacles, to enter the collection container;
- at least one first reusable receptacle receiver, configured to receive and stack first reusable receptacle into first stacks;
- optionally at least one second reusable receptacle receiver, configured to receive and stack second reusable receptacle into second stacks;
- a receptacle transport system, for transporting the first reusable receptacles, and optionally the second reusable receptacles, from the disposal module to the at least one first reusable receptacle receiver and optionally to at least one second reusable receptacle receiver;
wherein:
- the at least one first reusable receptacle receiver is orientated horizontally, thereby stacking the first reusable receptacle into horizontal first stacks; and,
- optionally in that the at least one second reusable receptacle receiver is orientated horizontally, thereby stacking the second reusable receptacle into horizontal second stacks.

The advantage of such a collection container is that reusable receptacles are stacked horizontally. For a collection container, capacity is a key parameter. In theory, the length and the width of the collection container can easily amended or enlarged. However, the height of the collection container is more restricted, as the disposal opening needs to be placed at a height that is easily reachable for the user. Hence, in terms of optimising the capacity of the collection container the height underneath the disposal opening needs to be optimally used. Horizontal stacks contribute to this optimalization. At one end of a stack of reusable receptacles, there is always one reusable receptacle sticking out of the stack, for example the conical part of the first reusable receptacle, when conical reusable receptacles are used. This volume is a suboptimal used volume that decreases the capacity of the collection container. For horizontal stacks, this suboptimal used volume is for example pointing in a horizontal direction, so that it does not take up any vertical space. Hence, the horizontal stacks can be highly efficiently packed in the vertical dimension. Even more, as the horizontal stacks are on there side, they can be rolled through the collecting container, what simplifies the mechanics needed in the collection container. Even more, gravity and slopes can be used to move stacks inside the collection container.

In some embodiments, the first reusable receptacles and the second reusable receptacles differ in size and/or in volume. For example, the first reusable receptacles hold 25 cl each, and the second reusable receptacles hold 33 cl each.

In some embodiments, the disposal module is configured to provide a reusable receptacle horizontally to the receptacle transport system or to the at least one reusable receptacle receiver. In some embodiments the disposal module is configures so that the reusable receptacles are tumbled through the disposal opening, so that the reusable receptacle falls into the horizontal position inside the disposal module. This may be achieved by disposal opening that is form congruent to the reusable receptacles, and wherein eh disposal opening is orientated so that the reusable receptacle needs to be placed upright or preferably upside down in or through the disposal opening. A tumble element may be present in at the underside of the disposal opening or in the disposal module, preventing the reusable receptacle from sliding in, but requiring the reusable receptacle to be tumbled through the disposal opening. Example of such tumble elements may be a stop placed along the lower side of the disposal opening, or behind the disposal opening in the disposal module. Such a tumbling mechanism has the advantage that no or only limited vertical space is lost, so that there is more vertical space to be used for actually storing used reusable receptacles, which optimises the capacity of the collection container.

In some embodiments, the receptacle transport system is configured to transport the receptacle horizontally from the disposal module to the at least one reusable receptacle receiver. Preferably, the height of a reusable receptacle is larger than the largest diameter of a reusable receptacle, hence transporting a reusable receptacle horizontally requires less vertical space, allowing more vertical space to be used to collect reusable receptacles in the collection container.

In some embodiments, the collection container comprises at least one first collection cartridge for collection first horizontal stacks, and optionally at least one second collection cartridge for collection second horizontal stacks. This way two different reusable receptacles can be separately collected in a single collection container.

In some embodiments, the disposal module comprises a recognition module, configure to distinguish reusable receptacles into first reusable receptacles and second reusable receptacles. The recognition module may direct the first reusable receptacles towards the first reusable receptacle receiver and the second reusable receptacle receiver. Preferably the recognition module controls a valve to direct the reusable receptacles towards the first or second reusable receptacle receiver.

In some embodiments, the recognition module comprises a label reader, and preferably wherein the first reusable receptacles and the second reusable receptacles are labelled each with a label. In some embodiments, the recognition module directs the receptacle transport system towards transporting the first reusable receptacles to the first reusable receptacle receiver and the second reusable receptacles to the second reusable receptacle receiver, preferably based on the information on the label on the receptacle.

In some embodiment, the recognition module directs unknown object or unlabelled reusable receptacles to be expelled back through the disposal opening.

In some embodiments, a sink is placed on the outside and/inside of the collection container, preferably below the disposal opening. This allows for removing unwanted liquid from the reusable receptacles, avoiding the liquid enters the collection container.

In some embodiments, the receptacle transport system comprises a first track, connecting the disposal module with the first reusable receptacle receiver; and a second track, connecting the disposal module the second reusable receptacle receiver.

In some embodiments, the recognition module directs a first reusable receptacle onto the first track and a second reusable receptacle onto the second track, preferably based on the information on the label on the receptacle.

In some embodiments, the receptacle transport system comprises a propulsion system, suitable for propelling a reusable receptacle into a reusable receptacle receiver, thereby stacking the reusable receptacles into the reusable receptacle receiver forming stacks.

In some embodiment, the propulsion system comprises a rotating screw preferably an Archimedes screw, preferably wherein the tread of the screw is configured to propel the reusable receptacle towards and/or in the reusable receptacle receiver, preferably along a track. The screw appears to be a effective tool to move reusable receptacles inside the collection container. The screw is robust and not easily blocked by dirt or object who may enter the collection container with the reusable receptacles.

In some embodiments, the propulsion system comprises a rotating screw, preferably an Archimedes screw, for each track.

In some embodiments, a reusable receptacle receiver comprises two half parts, wherein the half parts are pivotable compared to each other. Preferably, the two half parts of the reusable receptacle receiver pivot compared to each other, when the reusable receptacle receiver needs to be emptied from stacks or reusable receptacles. Preferably, by pivoting the two half parts, an opening is created in the reusable receptacle receiver so that the reusable receptacles and stacks can leave the reusable receptacle receiver trough said opening. Preferably, the created opening is at the bottom of the reusable receptacle receiver, so that the reusable receptacles and stacks can leave the reusable receptacle receiver under the influence of gravity, trough said opening.

In some embodiments, the reusable receptacle receiver comprises a tube-like structure, preferably formed by the two half parts, which are separated from each other along longitudinal direction of the tube-like structure. The tube-like structure and/or the half parts may be formed by brackets, preferably by a repetition of brackets. Preferably, a rail may be attached to the brackets of each half part, preferably so that a pair of parallel rails is present when the brackets or half parts close. The rails may eb used to support reusable receptacles and stacks, opening of the brackets or half parts enlarges the distance between the rails so that the reusable receptacles or stacks fall between the rails, preferably into a collection cartridge.

In some embodiments, each reusable receptacle receiver comprises at least two parallel rails suitable for supporting reusable receptacles or stacks. Preferably, the at least two parallel rails are placed horizontally. Preferably, the distance between the at least two parallel rails is smaller than the smallest diameter of the reusable receptacles. This way a horizontal reusable receptacle will be supported by the at least two parallel rails, and the reusable receptacles may be moved on the at least two parallel rails, preferably by the propulsion system. Reusable receptacles on the at least two parallel rails may be pushed into each other or over each other, thereby forming a stack of reusable receptacles, preferably in the reusable receptacle receiver. This way the stack of reusable receptacles may be formed in the reusable receptacle receiver.

In some embodiments, the at least two parallel rails of a reusable receptacle receiver can be moved away from each other, so that the distance between the two rails is too large to support reusable receptacles or stacks. This way, the reusable receptacles or stacks may fall through the rails. Preferably, the opening and closing of the rails is based on a counting mechanism for counting the number of reusable receptacles in a reusable receptacle receiver. The counting mechanism may open the rails or the two half parts of the reusable receptacle receiver, when a predetermined number of reusable receptacles is reached. Preferably, the at least two parallel rails are an element of the different half parts of the reusable receptacle receiver.

In some embodiments, collection cartridges are placed below the reusable receptacle receivers. Preferably are the dimensions and the orientation of the collection cartridges configured so that the collection cartridges can receive stacks of reusable receptacles that are being expelled from the reusable receptacle receivers.

In some embodiments, the collection cartridges serve as temporary storage places for stacks of reusable receptacles, after the stacks have been expelled from the reusable receptacle receivers. Preferably, the tacks are stored horizontally in the collection cartridges. In some embodiments, the stacks fall into the collection cartridges under the influence of gravity, and orient them self's, parallel to each other. In some embodiment, the collection cartridges comprise internal fins for directing stacks inside the collection cartridges. In some embodiments, the collection cartridges comprise different storage levels for stacks, placed on top of each other. In some embodiments, the internal fins are angled, so that a stack can roll over the fins, towards a lower level. In some embodiments, the internal fins form a path for the stacks to roll trough the collection cartridge. This allows the stacks to move through the collection cartridge by gravity. Different stacks will roll down this path until they are stopped by the stack in front of them.

In some embodiments, the bottom of the collection cartridge may comprise a flap or flaps, said flap(s) being able to open the bottom or close the bottom of the collection cartridge. When the bottom of the cartridge is closed, stacks are prevented from falling or being expelled from the collection cartridge. As long as the flap is closed, stack will be collected in the collection cartridge. When the flap is opened, stacks may fall from the cartridge or being expelled, for example in a crate placed underneath the cartridge. This way, the stacks maty be removed from the collection container, to for example be cleaned. Preferably, there is a warning system, to monitor the amount of free places in the collection cartridge, sending a signal to an operator at a predetermined setting. This way the collection cartridges may eb empties before they are completely full.

In some embodiment, the flap(s) may be opened by a paddle.

In some embodiments, the collection container comprises at least four collection cartridges. One cartridge will be destined to collect first reusable receptacles and one cartridge will be destined to collect the second reusable receptacles. The collection cartridge that is first filled, may determine which reusable receptacles (first or second) will be collected in the third collection cartridge as the same reusable receptacles will be collected in the third collection cartridge as in the cartridge that was first full. Similarly, the fourth collection cartridge may collect reusable receptacles of the size for which there is no more room in the other cartridges. This way the capacity of the collection container may be optimised, and requires fewer emptying operations.

In some embodiments, a crate or multiple crates are placed below the collection cartridges. In some embodiments, a slot suitable for accommodating a crate or multiple slots suitable for accommodating a crate, are placed below the collection cartridges. This way gravity may be used to empty the cartridges.

In an embodiment, the recognition module is communicatively connected to a database and/or a network and/or a server. As a result thereof, the information obtained by the recognition module can be compared to information in a database, and a further action can be determined from such a comparison, such as the to which reusable receptacle receiver the reusable receptacle needs to be sent, or to refund the user who deposited the reusable receptacle in the collection container.

In an embodiment, the collection container furthermore comprises a first identification module, suitable for identifying a user. Thus, the scanned information on the label can be linked to a user.

In an embodiment, the collection container furthermore comprises a first communication module by means of which preferably a user can be informed about the information collected by the recognition module or the label reader and/or the information linked to said user.

In an embodiment, the information on the label, preferably scanned by the recognition module or the label reader, is compared to information in a database.

In an embodiment, the label is an RFID tag, preferably an HF RFID tag.

In an embodiment, the first label reader comprises an antenna for receiving radio waves, preferably a Near-Field Communication (NFC) antenna.

In an embodiment, the disposal opening is shape-congruent with the reusable receptacle. The term "shape-congruent" refers to the shape which the contour of the reusable receptacle follows. Preferably, the shape-congruent disposal opening on all sides is approximately at most 20 mm, preferably at most 15 mm, preferably at most 10 mm, preferably at most 5 mm larger than the contour of the reusable receptacle. Preferably, the shape-congruent disposal opening on all sides is approximately at least 5 mm, preferably at least 10 mm, preferably at least 15 mm, preferably at least 20 mm larger than the contour of the reusable receptacle.

The term "shape-congruent" preferably refers to a shape which corresponds to the contour of the reusable receptacle. This ensures that objects which are larger than the reusable receptacles cannot be deposited in the collection container, which provides a first selection for undesirable objects.

In an embodiment, the disposal opening is trapezoidal which only makes it possible to insert conical beakers. Preferably, the trapezoidal disposal opening is oriented in such a way that the small and large base of the trapezium are oriented horizontally. Preferably, the trapezoidal disposal opening is oriented in such a way that the large base of the trapezium is at the bottom and horizontal is. In an embodiment, the large base of the trapezium is replaced by a circular arch.

In an embodiment, an indicator is provided, such as an indicator light, for example an LED strip fitted around the disposal opening, said indicator being suitable to communicate information about the state of the collection container to a user. For example, the indicator may become green when the collection container is ready to receive a reusable receptacle or become red when the collection container is not ready to receive a reusable receptacle, for example because the collection container is full, or an error has occurred.

In an embodiment, a first movement sensor, preferably an IR sensor, is present which can detect movement through the disposal opening. This sensor may be used to activate the collection container, for example from a standby mode. The standby mode may be activated if no movement is detected by the sensor for a certain period of time.

In an embodiment, the disposal opening has a shape which is such that the reusable receptacle can only be inserted into the disposal opening with its filling opening pointing downwards. This ensures that liquid and other objects in the reusable receptacle flow out or fall from the reusable receptacle, so that the eventually collected reusable receptacles are empty. This makes transportation of the collected reusable receptacles easier. In addition, it ensures that the collection of reusable beakers is ready to be loaded into a dishwasher, an emptying step is not required any longer.

In an embodiment, the disposal opening is provided with a closing flap. The closing flap is able to at least temporarily alter the shape of the disposal opening in such a way that no reusable receptacles can be inserted via the altered shape. Preferably, the closing flap opens when a label of a reusable receptacle is detected by a label reader, preferably the disposal label reader. Preferably, the disposal label reader operates the closing flap.

In an embodiment, the disposal module comprises a recess and the disposal opening is arranged in the recess of a side wall of the recess. The recess ensures that objects which are larger than the recess cannot be inserted. In an embodiment, a label reader, preferably the disposal label reader, is arranged in the recess or a side wall of the recess. By arranging both the disposal opening and the disposal label reader in the recess, the disposal opening and the disposal label reader can be brought in the vicinity of one another, so that detection of the reusable receptacle in the vicinity of the disposal opening can be detected. In an embodiment, the closing flap opens when the disposal label reader detects a label on a reusable receptacle, which ensures that fewer foreign objects can be inserted into the collection container.

In an embodiment, the disposal opening is provided in the bottom surface of the recess. This ensures that the reusable receptacle can drop through the disposal opening on account of the force of gravity. In an embodiment, the disposal label reader is provided in the top surface of the recess. If the label is then provided on the underside of the reusable receptacle, the label is only detected by the label reader if the receptacle is positioned in the recess with the filling opening directed downwards. As a result thereof, any remaining liquid flows out of the reusable receptacle, so that the reusable receptacles collected in the collection container are empty.

In an embodiment, the disposal label reader is arranged in the recess in such a way that the label on the reusable receptacle can only be detected if the reusable receptacle is positioned in the recess with the filling opening pointing downwards, preferably over the disposal opening.

In an embodiment, the disposal label reader is the first label reader.

In an embodiment, the collection container comprises at least one door, as a result of which the collector is accessible for emptying.

The invention provides in a collection container comprising:
- at least one disposal module, wherein the disposal module comprises a disposal opening in the collection container, suitable for allowing first reusable receptacles, and optionally second reusable receptacles, to enter the collection container;
- at least one first reusable receptacle receiver, configured to receive and stack first reusable receptacle into first stacks;
- optionally at least one second reusable receptacle receiver, configured to receive and stack second reusable receptacle into second stacks;
- a receptacle transport system, for transporting the first reusable receptacles, and optionally the second reusable receptacles, from the disposal module to the at least one first reusable receptacle receiver and optionally to at least one second reusable receptacle receiver;
- for each reusable receptacle receiver, at least one collection cartridge configured to receive stacks from said reusable receptacle receiver;
wherein:
- the at least one first reusable receptacle receiver is orientated horizontally, thereby stacking the first reusable receptacle into horizontal first stacks; and,
- optionally in that the at least one second reusable receptacle receiver is orientated horizontally, thereby stacking the second reusable receptacle into horizontal second stacks.

The invention furthermore provides in a kit, comprising:
- at least one, preferably several, first reusable receptacle provided with a label (3) which bears information, preferably wherein said first reusable receptacle is a first reusable beaker;
- optionally, at least one, preferably several, second reusable receptacle provided with a label (3) which bears information, preferably wherein said second reusable receptacle is a second reusable beaker; and,
- a collection container according to an embodiment as described herein.

### EXAMPLES

Reference is made to the figures by way of example. The embodiments illustrated in the figures and their reference numerals relate to preferred embodiments of the present invention and should by no means be interpreted as being limiting.

### Example 1: Collection container

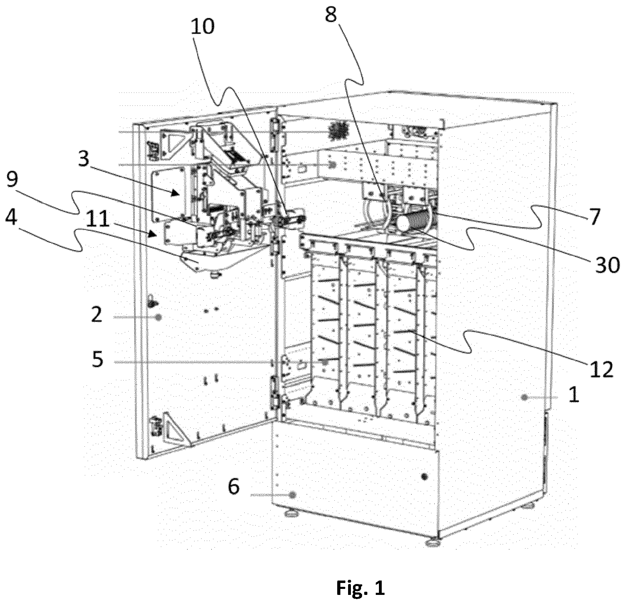

**Fig. 1** shows a collection container (1) according to an embodiment of the invention, with the door (2) in an open position, revealing some of the inside of the collection container (1). The disposal module (3) is attached to the inside of the door (2). Underneath the disposal module (3), the sink (4) can be seen, for draining fluids away. The collection container (1) comprises a first reusable receptacle receiver (7) and a second receptacle receiver (8) which are connected to the disposal module (3) by a first stack (9) and the second track (10) of the transport system (11). Inside the first reusable receptacle receiver (7), a stack (30) is depicted. Four collection cartridges (5) are mounted below the first reusable receptacle receiver (7) and second reusable receptacle receiver (8). Each collection cartridge (5) comprises fins (12) to guide stacks trough the collection cartridges (5). Yet below the collection cartridges (5), slots (6) for accommodating crates are provides, so that the stacks can be expelled from the collection cartridges (5) to empty the collection container (1).

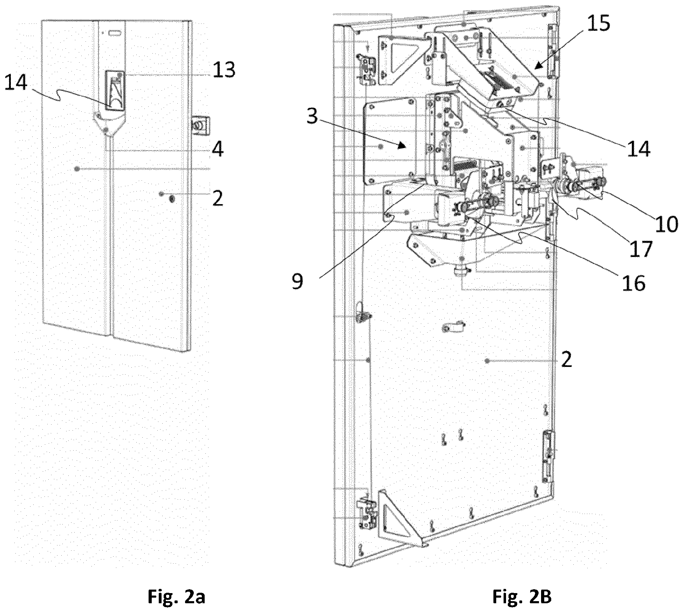

**Fig. 2a and 2b** show details of the door of the collection container (1) depicted in Fig. 1. On the outside of the door (2) (Fig 2a) a sink (4) is present for draining fluids. The sink (4) is placed below the disposal opening (13), which is form congruent to the reusable receptacles. A tumbling element (14) is present at the lower side of the disposal opening (13), preventing that the reusable receptacle is slide into the collection container (1), so that the reusable receptacle needs to be tumbled trough the disposal opening (13), landing horizontally in the disposal module (3).

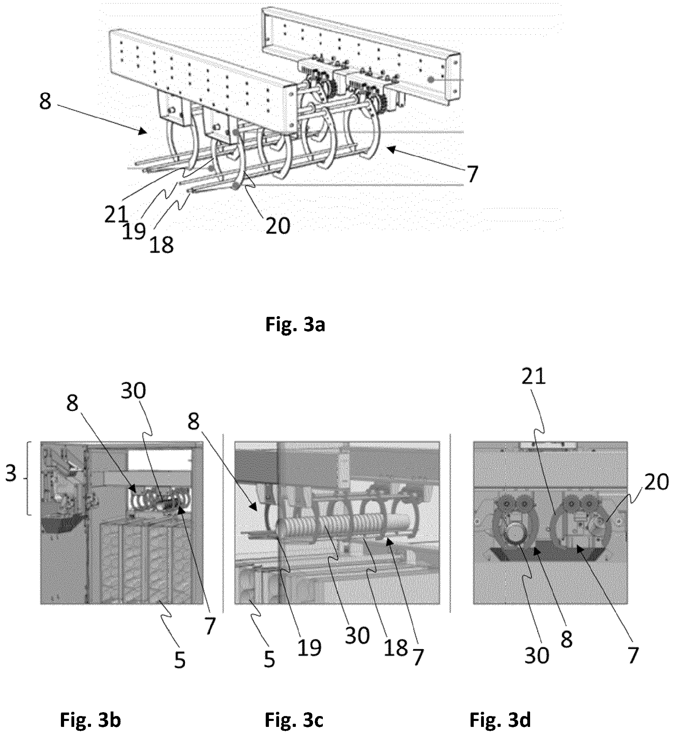

On the inside of the door, Fig 2b, the disposal module (3) is mounted. The disposal module (3) comprises a label reader (14), which functions as recognition module (15). The label reader (14) is configured to read labels on the reusable receptacles. Based on the information gathered from the labels, the recognition module (15) sends the reusable receptacle, either to the first track (9) or the second track (10), preferably by the movement of a valve or valves. A first screw (16) moves reusable receptacles along the first track (9), towards the first reusable receptacle receiver (7) (see Fig. 3); and a second screw (17) moves reusable receptacles along the second track (10), towards the second reusable receptacle receiver (8) (see Fig. 3).

**Fig. 3a to 3d** shows the first reusable receptacle receiver (7) and the second reusable receptacle receiver (8) as used in the collection container (1) depicted in Fig. 1. Each reusable receptacle receiver is formed of a pair of parallel rails (18, 19), which are attached to brackets (20, 21). The brackets (20, 21) may open and close, thereby changing the distance between the parallel rails (18, 19). When the brackets (20, 21) are open, the distance between the rails (18, 19) is too large to support a stack (30), so that the stack (30) falls between the rails, towards a collection cartridge (5) (see Figures 3b, 3c and 3d).

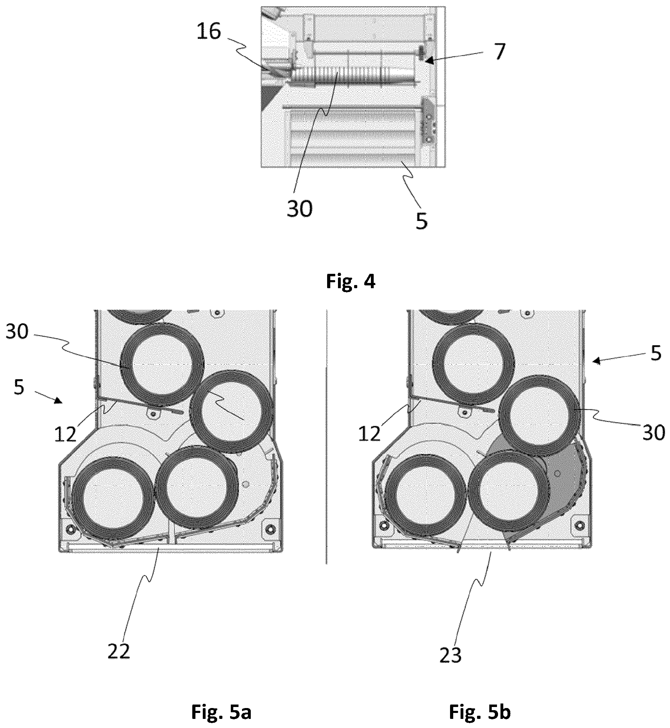

**Fig.** 4 shows how a reusable receptacle receiver (7) and a collection cartridge (5) are placed inside the collection container (1) depicted in Fig. 1. A stack (30) is depicted in the reusable receptacle receiver (7). The propulsion system, i.e. a screw (16), can be seen to move a reusable receptacle towards the reusable receptacle receiver (7).

**Fig. 5a and 5b** depicts a detail on how stacks (30) are collected in a collection cartridge (5) as used the collection container (1) depicted in Fig. 1, with a closed bottom (22), see Fig. 5a. Whereas Fig.5b depicts the opening of the bottom (23) of the collection cartridge (5), just before the stack (30) will start to fall out the collection cartridge (5), into the crate (not shown in Fig.5) placed in the slot (6)(not shown in Fig.5, see Fig. 1) mounted below the collection cartridges (5).

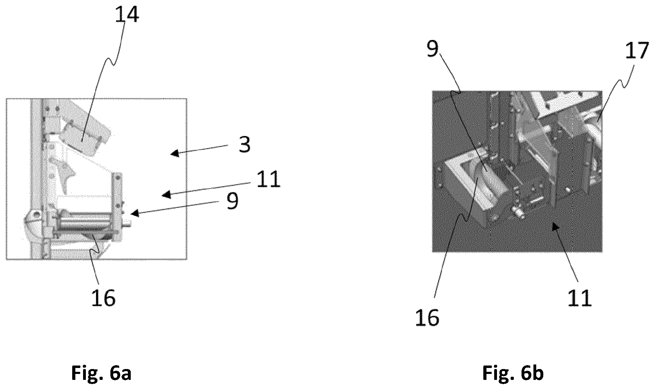

**Fig. 6a and 6b** depicts details of the transport system (11) as used in the collection container (1) depicted in Fig. 1. The label reader (14) of the disposal module (3) can be seen and the first track (9) of the transport system (11), which comprises a screw (16) to move the reusable receptacle along the first track (9).

## Claims

1. A collection container comprising:
- at least one disposal module, wherein the disposal module comprises a disposal opening in the collection container, suitable for allowing first reusable receptacles, and optionally second reusable receptacles, to enter the collection container;
- at least one first reusable receptacle receiver, configured to receive and stack first reusable receptacle into first stacks;
- optionally, at least one second reusable receptacle receiver, configured to receive and stack second reusable receptacle into second stacks;
- a receptacle transport system, for transporting the first reusable receptacles, and optionally the second reusable receptacles, from the disposal module to the at least one first reusable receptacle receiver and optionally to at least one second reusable receptacle receiver;
**characterised in that**:
- the at least one first reusable receptacle receiver is orientated horizontally, thereby stacking the first reusable receptacle into horizontal first stacks; and,
- optionally **in that** the at least one second reusable receptacle receiver is orientated horizontally, thereby stacking the second reusable receptacle into horizontal second stacks.

2. The collection container according to claim 1, wherein for each reusable receptacle receiver, at least one collection cartridge configured to receive stacks from said reusable receptacle receiver, preferably at least one collection cartridge is configured below the reusable receptacle receiver.

3. The collection container according to claim 1 or 2, wherein the disposal module is configured to provide a reusable receptacle horizontally to the receptacle transport system or to the at least one reusable receptacle receivers.

4. The collection container according to any one of previous claims, wherein the receptacle transport system is configured to transport the receptacle horizontally from the disposal module to the at least one reusable receptacle receiver.

5. The collection container according to any one of previous claims, wherein the receptacle transport system comprises a first track, connecting the disposal module with the first reusable receptacle receiver; and a second track, connecting the disposal module the second reusable receptacle receiver.

6. The collection container according to any one of previous claims, wherein the disposal module comprises a recognition module, configure to distinguish reusable receptacles into first reusable receptacles and second reusable receptacles.

7. The collection container according to any one of previous claims, wherein the first reusable receptacles and the second reusable receptacles differ in size and/or in volume.

8. The collection container according to any one of previous claims, wherein the recognition module comprises a label reader, and preferably wherein the first reusable receptacles and the second reusable receptacles are labelled each with a label.

9. The collection container according to any one of previous claims, wherein the recognition module directs the receptacle transport system towards transporting the first reusable receptacles to the first reusable receptacle receiver and the second reusable receptacles to the second reusable receptacle receiver, preferably based on the information on the label on the receptacle.

10. The collection container according to any one of previous claims, wherein the receptacle transport system comprises a propulsion system, suitable for propelling a reusable receptacle into a reusable receptacle receiver, thereby stacking the reusable receptacles into the reusable receptacle receiver forming stacks.

11. The collection container according to any one of previous claims, wherein each reusable receptacle receiver comprises at least two parallel rails, wherein the distance between the at least two parallel rails is suitable for supporting reusable receptacles or stacks, preferably wherein said at least two parallel rails of a reusable receptacle receiver can be moved away from each other, so that the distance between the two rails is too large to support reusable receptacles or stacks.

12. The collection container according to any one of previous claims, wherein the collection cartridges serve as temporary storage places for stacks of reusable receptacles, after the stacks have been expelled from the reusable receptacle receivers.

13. The collection container according to any one of previous claims, wherein the bottom of the collection cartridge may comprise a flap or flaps, said flap(s) being able to open the bottom or close the bottom of the collection cartridge.

14. The collection container according to any one of previous claims, wherein a slot suitable for accommodating a crate or multiple slots suitable for accommodating a crate, are placed below the collection cartridges.

15. The collection container according to any one of previous claims, wherein the reusable receptacles are beakers, preferably partly conical beakers, preferably partly conical stackable beakers.

16. A kit, comprising:
- at least one, preferably several, first reusable receptacle provided with a label which bears information, preferably wherein said first reusable receptacle is a first reusable beaker;
- optionally, at least one, preferably several, second reusable receptacle provided with a label which bears information, preferably wherein said second reusable receptacle is a second reusable beaker; and,
- a collection container according to any one of claims 1 to 15.
